# EUROPEAN PATENT APPLICATION

(11) **EP 2 047 756 A1**
(43) Date of publication of application: **15.04.2009**
(21) Application number: 07118011.1
(22) Date of filing: 08.10.2007
(51) Int. Cl.: A23L 1/00

(54) **Hydrodispersible compositions**

(71) Applicant: Nestec S.A., 1800 Vevey (CH)
(72) Inventor: The designation of the inventor has not yet been filed
(74) Representative: Marquardt, Ulf

(57) **Abstract**

The present invention generally relates to the field of forming emulsions. In particular the present invention provides a formulation and a method to facilitate to prepare emulsions from liposoluble substance in aqueous phases. One embodiment of the present invention relates to a hydrodispersible formulation comprising a liposoluble substance and an emulsifier obtainable by a method comprising the steps of melting the emulsifier and combining the liposoluble substance with the emulsifier.

## Description

The present invention generally relates to the field of forming emulsions. In particular the present invention provides a formulation and a method to facilitate to prepare emulsions from liposoluble substance in aqueous phases. More specifically, the present invention relates to a hydrodispersible formulation in accordance with claim 1, a product in accordance with claim 23, a use in accordance with claims 26, and a method of claim 27.

In industry today oftentimes liposoluble ingredients must be incorporated into water based systems. This is usually achieved by forming an emulsion, often times by intense stirring. An emulsion is a dispersion of droplets of one immiscible liquid within another. The stability and homogeneity of an emulsion can be enhanced by the use of emulsifiers. These compounds concentrate at the interface between the immiscible liquids, where they are capable of forming interfacial films due to their hydrophilic/lipophilic structure.

In particular in the food industry it is oftentimes desirable to incorporate lipophilic compounds into watery products. Many valuable liposoluble food ingredients, a lot of aroma or flavour compounds with lipophilic properties, as well as numerous phytonutrients with beneficial health effects are, however, difficult to incorporate in aqueous food systems or to dissolve in water.

Oil-in-water emulsions of such ingredients are often obtained by dissolution in heated vegetable oil followed by emulsification into the water phase. However, this procedure is rather tedious and the resulting emulsions are frequently not stable.

Furthermore, the liposoluble ingredients to be incorporated into a product - in particular if they are flavour compounds, aroma compounds or phytonutrients - must be carefully dosed in order to achieve a desired effect. However, these compounds are usually very thick oily substances which are very difficult to dose accurately.

Presently, this problem is overcome in the art by the addition of organic solvents. However, in particular from food products, organic solvents must be removed later on to avoid the unhealthy effects many organic solvents have. Residual organic solvents may cause health problems.

Consequently there exists a need in the art to provide a composition comprising a desired liposoluble substance that is easily and accurately dosable and which forms a stable emulsion after dispersion in aqueous liquids.

The present inventors have addressed this need. The present invention achieves this object by providing a hydrodispersible formulation in accordance with claim 1, a product in accordance with claim 23, a use in accordance with claims 26, and a method of claim 27.

It is clear to those of skill in the art that the expression "liposoluble substance" comprises one ore more liposoluble substances unless otherwise indicated.

It is also clear to those of skill in the art that the expression "emulsifier" comprises one ore more emulsifiers unless otherwise indicated.

The formulation of the present invention provides a convenient preparation/form of e.g. liposoluble bioactives, which facilitates their incorporation into aqueous food systems. The formulation is produced under mild conditions, without the use of organic solvents or elevated temperatures and may contain a hydro soluble solid carrier. The resulting product, in form of a well rinsing powder, can be used for improved delivery of hydrophobic active ingredients such as liposoluble vitamins, antioxidants or precious phytonutrients.

The hydrodispersible formulation in accordance with the present invention exhibits an improved solubility and an improved delivery in aqueous solution.
The formulations are furthermore readily dispersible for preparing emulsions. These were found to be surprisingly stable, even over a broad pH-range, in particular at acidic pH values.

Producing the formulations of the present invention and the subsequent formation of the emulsion can be both carried out under relatively mild conditions and/or without the need to use organic solvents. This allows treating the liposoluble compounds gently so that their activity and stability is essentially not reduced. The resulting formulation is a free flowing powder, which is storage stable, user friendly, easy to use and simple to dose accurately.

Hence, the present inventors were able to provide hydrodispersible formulations, e.g., of liposoluble bioactives, aroma compounds and/or any other fat soluble ingredient, for example a food ingredient, for an improved solubility and delivery in aqueous solutions.

The resulting formulation is preferably a food grade formulation if it is intended for a food product and is in a user friendly form, which allows incorporating, e.g., lycopene, lipophilic rosemary antioxidants, essential oils, oleoresins and/or MCT Licosa extracts into water or hydrophilic food systems under very soft conditions. The formulation, in form of a powder, may be obtained by dissolving the oily ingredient in a specific, suitable emulsifier, previously melted under mild heating (below 100°C), followed by incorporating a water soluble, solid carrier into the liquid blend by thorough mixing. An antioxidant, to stabilize lycopene for instance, may be added. The final, readily dispersible formulation is very user friendly and may exhibit an enhanced bioavailability of the active ingredient.

Essential to the present invention is that a liposoluble substance is incorporated into a melted emulsifier.

Hence, one embodiment of the present invention is a hydrodispersible formulation comprising a liposoluble substance and an emulsifier obtainable by a method comprising the steps of melting the emulsifier and combining the liposoluble substance with the emulsifier.

A preferred embodiment of the present invention is a hydrodispersible formulation comprising a liposoluble substance and an emulsifier obtained by a method comprising the steps of melting the emulsifier and combining the liposoluble substance with the emulsifier.

It is possible that, e.g., at least one emulsifier is melted first and that then at least one liposoluble substance, optionally in combination with further compounds, such as, e.g. carriers or fillers, is added to the melted emulsifier.

Equally well the at least one emulsifier can be combined with the at least one liposoluble substance and then the mixture is heated until at least one emulsifier melts and combines with at least one liposoluble substance.

Further alternatively the at least one emulsifier and the at least one liposoluble substance can be heated so that at least one emulsifier melts while combining them.

The resulting formulation will yield excellent emulsions upon dispersion in aqueous phases and will have a very good dosability since it will have lost its sticky oily character of the liposoluble substance alone.

It is a preferred embodiment of the present invention that the hydrodispersible formulation is present in a powder form.

For an even further improved flowability and - consequently - dosability, it is advantageous to incorporate a water soluble solid carrier into the formulation of the present invention.

It is clear to those of skill in the art that the expression "water soluble solid carrier" comprises one or more water soluble solid carriers unless otherwise indicated.

This carrier can be incorporated at any stage during the production process of the formulation, e.g., it can be combined with the liposoluble substance before addition to the melted emulsifier; it can be combined with the melted emulsifier before the liposoluble substance is added; it can be combined with the emulsifier before the emulsifier is melted; and/or it can be added after the liposoluble substance and the emulsifier are combined.

Consequently, in one preferred embodiment of the present invention the hydrodispersible formulation further comprises a water soluble solid carrier. This formulation is obtainable, preferably obtained, by a method comprising the steps of dissolving the liposoluble substance in the melted emulsifier and adding the water soluble solid carrier thereto.

The resulting powder will have an improved quality if emulsifier, liposoluble substance and water soluble solid carrier are combined by mixing, preferably in a mixer or a blender.

The hydrodispersible formulation may be a homogeneous mixture to improve optical appearance and to ensure an optimal and uniform distribution of the individual compounds within the formulation.

Powders in general have the advantage that they are easily dosable and that they can be quickly incorporated into aqueous solution.

For optimal properties of the powder it is preferred that the powder has an average particle diameter of 10 µm to 1 mm. In particular for large scale applications it may be preferred that the hydrodispersible formulation is granulated. Granulation will further improve dosability and - at the same time - will minimize dust formation during pouring and will increase flowability. It is preferred that a granulate has an average particle diameter of 1 mm to 20 mm.

Generally, the amount of liposoluble substance in the formulation of the present invention is not particularly limited and may vary from 99,9 % to 0,01% of the formulation. The optimal ratio of liposoluble substance to emulsifier and optionally carrier will depend on the kind of liposoluble substance, emulsifier, and -if present-carrier used.

Generally, however, it is preferred that the hydrodispersible formulation in accordance with the present invention is characterized in that the liposoluble substance is present in an amount of 0,1-80 weight-%, preferably 10-40 weight-% relative to the weight of the hydrodispersible formulation.

It is also preferred that the emulsifier is present in an amount of 0,1-80 weight-%, preferably 10-40 weight-% relative to the weight of the hydrodispersible formulation.

It is further preferred that the water soluble solid carrier is present in an amount of 0,1-95 weight-%, preferably 50-80 weight-% relative to the weight of the hydrodispersible formulation.

The hydrodispersible formulation of the present invention is not limited to any specific kind of liposoluble substance. Any kind of liposoluble substances can be used depending on the intended purpose of the resulting formulation. If the resulting formulation is intended to be added to a food product, it is preferred that the liposoluble substance is a food grade substance. A substance is "food grade" if it is generally regarded as safe for use in food. Particular preferred liposoluble substances are selected from the group consisting of a bioactive, an aroma compound, a flavour compound, a phytochemical, in particular a phytonutrient or mixtures thereof.

A bioactive is a compound with a biological activity.

An aroma compound is a compound that has a smell or odour. A compound has a smell or odour when the compound is sufficiently volatile, so it can be transported to the olfactory system in the upper part of the nose in a sufficiently high concentration to be able to interact with one or more of the olfactory receptors.

A flavour compound is a compound that is capable of eliciting a sensory impression which is determined mainly by the chemical sense of taste.

Phytochemicals are plant or fruit derived chemical compounds. Phytonutrients refer to phytochemicals or compounds that are derived from edible plants.

In a particular preferred embodiment of the present invention the liposoluble substance is selected from the group consisting of oleoresins, in particular oleoresin of tomatoes (Indena); Licosa medium chain triglyceride extracts of plants, in particular rosemary extract , preferably Herbor O 25 (Robertet); essential oils, antioxidants, vitamins or mixtures thereof.

The emulsifier may be selected from the group consisting of esters of mono- and diglycerides, in particular Datem, Acetem, Lactem, Citrem; potassium- or calciumstearoyllactylate (SSL, CSL); sorbitanemonostearate; sorbitanemonolaurate; sorbitanetristearate; sugar esters; lecithin; lysolecithin; or mixtures thereof.

The water soluble solid carrier may be selected from the group consisting of maltodextrins; sucrose; lactose; dextrose; starches; modified starches; xanthan gum; sorbitol; mannitol; xylitol; lactit; gum Arabic; pectins; guar gum; cellulose; cellulose derivatives; or mixtures thereof.

The hydrodispersible formulation of the present invention is preferably a food grade formulation.

Their unusual stability is a further feature that characterizes the emulsions that can be prepared from the formulations of the present invention. The formulations of the present invention are characterized in that the formulation after dispersion in water results in an emulsion that is stable for at least 24 hours. The hydrodispersible formulation in accordance with the present invention and the emulsion formed therewith are further characterized in that they are stable at a broad pH range, e.g. from pH 1-11 and - in particular - at acidic pH, e.g., in the range of pH 2,5-5,5.

Optionally the stability of the emulsion may be further enhanced by the addition of a stabilizer. This stabilizer may be added, e.g., to the formulation of the present invention or it may be added to the emulsion formed with the formulation of the present invention. Hence in one embodiment the hydrodispersible formulation further comprises a stabilizer.

Stabilizers may also be added for other purposes than stabilizing an emulsion, e.g., to increase the stability of a final product and/or to increase storage times. For example, the stabilizer may be an antioxidant.

In one embodiment of the present invention the bioavailability of the liposoluble substance in the formulation of the present invention and in the emulsion prepared with the formulation of the present invention is increased.

The present invention also comprises a product comprising the hydrodispersible formulation of the present invention.

This product may be any product. In particular it may be a food product or a medicament.

The invention furthermore comprises the use of the hydrodispersible formulation described herein to enrich a product with a bioactive compound, to confer an aroma to a product, to flavour a product, and/or to enrich a product with a phytonutrient.

The invention also comprises a method to prepare a hydrodispersible formulation as described herein comprising the steps of melting an emulsifier and combining a liposoluble substance, an emulsifier and optionally a water soluble solid carrier. For example, the liposoluble substance and optionally the water soluble carrier is combined with the melted emulsifier. Alternatively, the liposoluble substance, optionally the water soluble carrier and the emulsifier may be combined first and then heated to melt the emulsifier.

Preferably, the method of the present invention comprises the steps of dissolving the liposoluble substance in the melted emulsifier and adding the water soluble solid carrier thereto.

This method of the present invention may be used to increase the bioavailability of the liposoluble substance and/or to increase the stability of the liposoluble substance at acidic pH.

The present invention also comprises a method to prepare an emulsion from a liposoluble compound in a water based phase comprising the step of preparing a hydrodispersible formulation as described herein and incorporation this formulation into a water based phase, optionally by stirring.

It is clear to those of skill in the art that they can combine freely any features described herein without departing from the scope of the present invention as originally disclosed.

Further advantages and features of the present invention are apparent from the following examples and figures.

Figure 1 shows Liposoft powders (hydrodispersible formulations according to the present invention) of different oleoresins (from left to right): Tomato, Pimento (red pepper), Curcuma, Chlorophyll extract, Paprica extract, Rosemary oleoresin

Figure 2 shows two oleoresins and their corresponding hydrodispersible formulations in powder form (Liposoft powders): Rosemary and Red pepper

Figure 3 shows an oleoresin (Curcuma) and an oily antioxidant (Herbor O 25) and their corresponding hydrodispersible formulation in powder form (Liposoft powders)

Figure 4 shows tomato oleoresin (Lyc-O-Mato, from Lycored) in different forms (from left to right): Oleoresin (very sticky), in water (floating on the surface), as powder (hydrodispersible formulation according to the present invention), powder in emulsion in water (1 % w/w)

Figure 5 shows curcuma oleoresin (LICOSA Curcuma, obtained by mechanical extraction with oily carrier) in different forms (from left to right): Oleoresin (MCT extract), in water (floating on the surface), as powder (hydrodispersible formulation according to the present invention), powder in emulsion in water (1% w/w)

Figure 6 shows Liposoft Herbor O 25 (rosemary antioxidant) as powder and in emulsion (0.5% w/w)

### Example 1:

Preparation of an emulsion according to the state of the art (comparative example) 0.1g of Datem (Panodan 150 K, Danisco) or 0.1g of SSL (P55 Veg, Danisco) are weighed in a Pyrex test tube. 20 ml of water are added. The mixture is heated up with a hairdryer to dissolve completely the emulsifier. After cooling down, 0.1g of MCT (medium chain triglycerides) are added. The mixture is stirred with a Vortex mixer (Vortex Genie 2) for about 60 sec. Dispersion is continued with an Ultra-Turrax disperser (Ultra-Turrax T 25) during 1 min at a speed of 20'000 rpm to obtain an emulsion.

### Example 2

Preparation of a hydrodispersible formulation of the present invention Licosa: 1g of Datem (Panodan 150 K) was gently heated in a large Pyrex test tube to about 75°C (with a hairdryer) until melting. 1g of an oily Licosa extract, e.g. Licosa Pimento (red pepper extract in MCT, obtained by mechanical extraction with an oily carrier. Nestlé patents EP639336 and EP658316) was added. How this extract is obtained is described in detail in EP639336, the disclosure of which is incorporated by reference herein. The liquid mixture was homogenized under stirring (on a Vortex mixer) and 8g of maltodextrin (Glucidex IT 12, agglomerated, micro granulated maltodextrin, Roquette) were added. The resulting blend was further homogenized by kneading with a spatula until a free flowing, orange red coloured powder, "Liposoft Pimento", was obtained.

Curcuma: 1g of Datem (Panodan 150 K) was gently heated in a large Pyrex test tube to about 75°C (with a hairdryer) until melting. 1g of an oily Curcuma extract was added. The liquid mixture was homogenized under stirring (on a Vortex mixer) and 8g of maltodextrin (Glucidex IT 12, agglomerated, micro granulated maltodextrin, Roquette) were added. The resulting blend was further homogenized by kneading with a spatula until a free flowing, orange red coloured powder, "Liposoft Curcuma", was obtained.

### Example 3:

Preparation of an emulsion with a Liposoft powder 200 mg of Liposoft Curcuma powder (hydrodispersible formulation according to the present invention) were weighed in a Pyrex test tube. 20ml of water or 10 mM phosphate buffer, pH4, were added. The suspension was mixed for about 60 sec on a Vortex mixer. Optionally, the resulting dispersion can be heated to about 75°C with a hairdryer. This mixture was finally homogenized with an Ultra-Turrax instrument at a speed of 20'000 rpm during 60 sec to get a stable, bright yellow coloured emulsion.

### Example 4:

Comparison of the stability of emulsions A dry mix of 2g of maltodextrin, 0.25g of Datem and 0.25g of Licosa Curcuma oleoresin was prepared in a large Pyrex test tube by kneading intensively with a spatula. The resulting powder is *less "powdery"* than Liposoft Curcuma (Example 3). An emulsion with 200mg of this powder was prepared according to the procedure of Example 3. To compare the stability of the resulting emulsion with that of Example 3, two corresponding samples were stored 1 day in a refrigerator at 4°C. The emulsion prepared with the dry mix - as the emulsion of Example 3 - was still completely stable. For comparison, an emulsion prepared according to Example was even not stable for more than 1 hour.

### Example 5:

### Liposoft Tomato:

A mixture of 1g of a composition of Lycopene Isomers (tomato oleoresin with enhanced bioavailability, patent application EP06118579, Indena) and 1g of Datem was gently heated up to about 75°C in a Pyrex test tube until melting of the mixture. After homogenisation on a Vortex mixer, 8g of Glucidex were added. Mixing was continued by kneading with a spatula until getting a homogeneous, intense red coloured powder.

### Liposoft Herbor O 25:

1g of Datem was melted in a Pyrex test tube and 1g of Herbor O 25 (MCT extract of rosemary antioxidants, Nestlé patent EP507064, Robertet) was added. The mixture was homogenized by means of agitation on a Vortex. 4g of maltodextrin (Glucidex IT 12) were added and this mixture was kneaded until obtaining a homogeneous powder. The resulting powder contains 1% w/w of carnosic acid and carnosol, the principal antioxidant compounds of rosemary. Dissolved in a concentration of 0.5% w/w, this product gives a white coloured emulsion, which stayed stable over months in a refrigerator at 4°C.

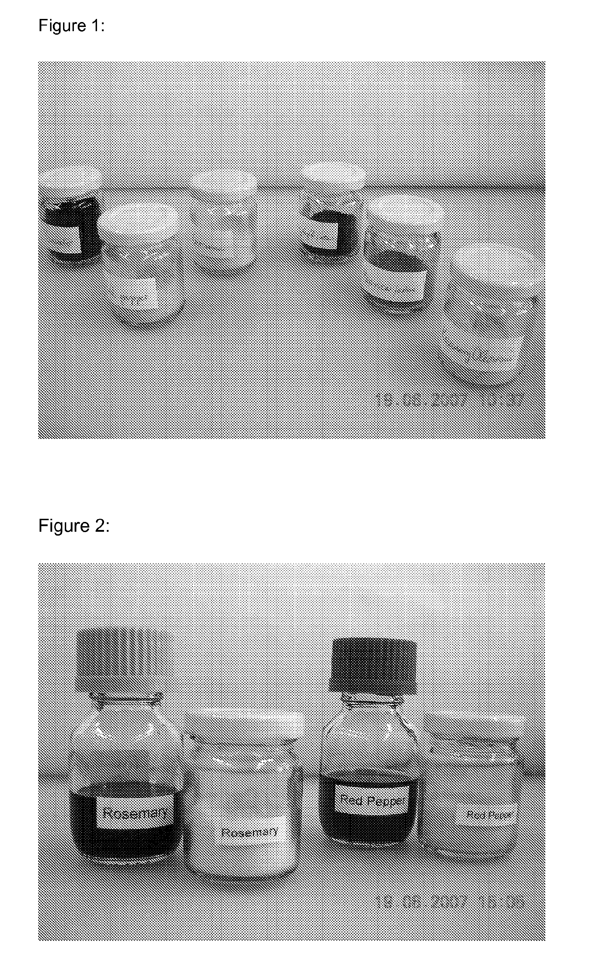

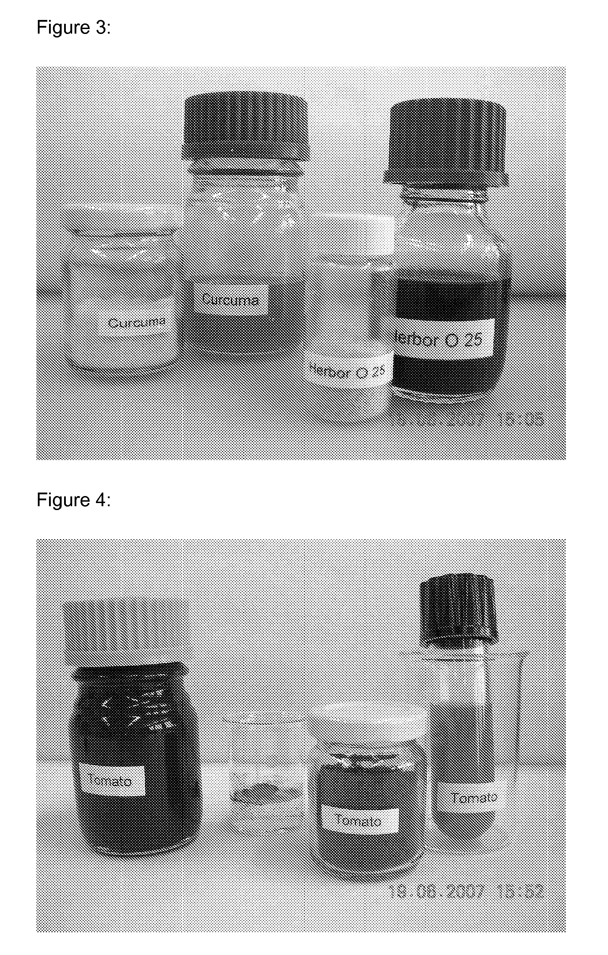

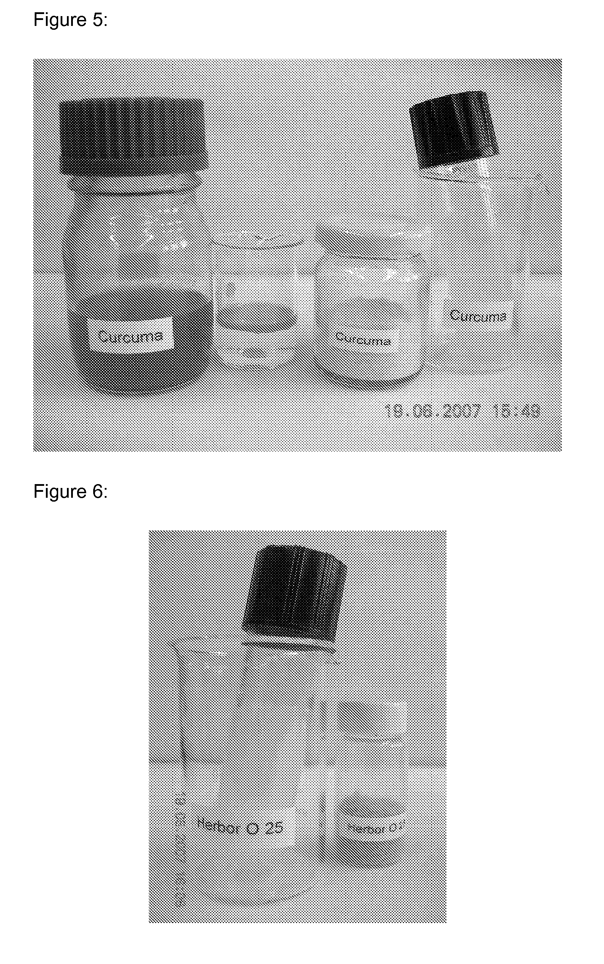

All further hydrodispersible formulation depicted in figures 1-5 my be prepared in an analogous fashion.

## Claims

1. Hydrodispersible formulation comprising a liposoluble substance and an emulsifier obtainable by a method comprising the steps of melting the emulsifier and combining the liposoluble substance with the emulsifier.

2. Hydrodispersible formulation in accordance with claim 1 in powder form **characterized in that** it further comprises a water soluble solid carrier.

3. Hydrodispersible formulation in accordance with one of claims 1-2 **characterized in that** it is obtainable by a method comprising the steps of dissolving the liposoluble substance in the melted emulsifier and adding the water soluble solid carrier thereto.

4. Hydrodispersible formulation in accordance with one of claims 1-3 **characterized in that** emulsifier, liposoluble substance and water soluble solid carrier are combined by mixing, preferably in a blender.

5. Hydrodispersible formulation in accordance with one of claims 1-4 **characterized in that** the liposoluble substance is present in an amount of 0,1-80 weight-%, preferably 10-40 weight-% relative to the weight of the hydrodispersible formulation.

6. Hydrodispersible formulation in accordance with one of claims 1-5 **characterized in that** the emulsifier is present in an amount of 0,1-80 weight-%, preferably 10-40 weight-% relative to the weight of the hydrodispersible formulation.

7. Hydrodispersible formulation in accordance with one of claims 1-6 **characterized in that** the water soluble solid carrier is present in an amount of 0,1-95 weight-%, preferably 50-80 weight-% relative to the weight of the hydrodispersible formulation.

8. Hydrodispersible formulation in accordance with one of claims 1-7 **characterized in that** the liposoluble substance is a food grade substance, preferably a bioactive, an aroma compound, a flavour compound, a phytonutrient or mixtures thereof.

9. Hydrodispersible formulation in accordance with one of claims 1-8 **characterized in that** the liposoluble substance is selected from the group consisting of oleoresins, in particular oleoresin of tomatoes (Indena); Licosa medium chain triglyceride extracts of plants, in particular rosemary extract , preferably Herbor O 25 (Robertet); essential oils, antioxidants, vitamins or mixtures thereof.

10. Hydrodispersible formulation in accordance with one of claims 1-9 **characterized in that** the emulsifier is selected from the group consisting of esters of mono- and diglycerides, in particular Datem, Acetem, Lactem, Citrem; potassium- or calciumstearoyllactylate (SSL, CSL); sorbitanemonostearate; sorbitanemonolaurate; sorbitanetristearate; sugar esters; lecithin; lysolecithin; or mixtures thereof.

11. Hydrodispersible formulation in accordance with one of claims 1-10 **characterized in that** the water soluble solid carrier is selected from the group consisting of maltodextrins; sucrose; lactose; dextrose; starches; modified starches; xanthan gum; sorbitol; mannitol; xylitol; lactit; gum Arabic; pectins; guar gum; cellulose; cellulose derivatives; or mixtures thereof.

12. Hydrodispersible formulation in accordance with one of claims 1-11 **characterized in that** the Hydrodispersible formulation is a food grade formulation.

13. Hydrodispersible formulation in accordance with one of claims 1-12 **characterized in that** the powder has an average particle diameter of 10 µm to 1 mm.

14. Hydrodispersible formulation in accordance with one of claims 1-13 **characterized in that** it is granulated.

15. Hydrodispersible formulation in accordance with claim 14 **characterized in that** the granulate has an average particle diameter of 1 mm to 20 mm.

16. Hydrodispersible formulation in accordance with one of claims 1-15 **characterized in that** the formulation is a homogeneous mixture.

17. Hydrodispersible formulation in accordance with one of claims 1-16 **characterized in that** the formulation after dispersion in water results in an emulsion that is stable for at least 24 hours.

18. Hydrodispersible formulation in accordance with one of claims 1-17 **characterized in that** the formulation further comprises a stabilizer.

19. Hydrodispersible formulation in accordance with claim 18 **characterized in that** the stabilizer is an antioxidant.

20. Hydrodispersible formulation in accordance with one of claims 1-19 **characterized in that** the liposoluble substance has an increased bioavailability.

21. Hydrodispersible formulation in accordance with one of claims 1-20 **characterized in that** it is stable at acidic pH.

22. Hydrodispersible formulation in accordance with one of claims 1-20 **characterized in that** it is easily dosable.

23. Product comprising a hydrodispersible formulation in accordance with one of claims 1-22.

24. Product in accordance with claim 23, **characterized in that** it is a food product.

25. Product in accordance with claim 23, **characterized in that** it is a medicament.

26. Use of a hydrodispersible formulation in accordance with one of claims 1-22 to enrich a product with a bioactive compound, to confer an aroma to a product, to flavour a product, and/or to enrich a product with a phytonutrient.

27. Method to prepare a hydrodispersible formulation in accordance with claims 1-22 comprising the steps of melting an emulsifier and combining a liposoluble substance, an emulsifier and a water soluble solid carrier.

28. Method in accordance with claim 27 comprising the steps of dissolving the liposoluble substance in the melted emulsifier and adding the water soluble solid carrier thereto.

29. Method in accordance with one of claims 27-28 to increase the bioavailability of the liposoluble substance.

30. Method in accordance with one of claims 27-29 to increase the stability of the liposoluble substance at an acidic pH.
